# EUROPEAN PATENT APPLICATION

(11) **EP 4 593 214 A1**
(43) Date of publication of application: **30.07.2025**
(21) Application number: 24223802.0
(22) Date of filing: 30.12.2024
(51) Int. Cl.: H01R 13/631, H01R 13/436, H01R 13/52

(54) **SOCKET, ELECTRICAL CONNECTOR, BATTERY PACK AND ELECTRIC DEVICE**

(30) Priority: 29.01.2024 CN 202420212902 U
(71) Applicant: Nio Technology (Anhui) Co., Ltd, Hefei City, Anhui 230601 (CN)
(72) Inventor: ZHAO, Yefei, Shanghai (CN); ZHANG, Julin, Shanghai (CN); YAO, Tingting, Shanghai (CN); ZHU, Yong, Shanghai (CN); YAN, Chunxiao, Shanghai (CN)
(74) Representative: Vossius & Partner Patentanwälte Rechtsanwälte mbB

(57) **Abstract**

The invention provides a socket, an electrical connector, a battery pack and an electric device, the socket including an insertion end and a tail end in the direction of a Z-axis, and the insertion end being configured for connection with a plug and including a first housing, a second housing, a third housing and an insertion terminal; where the first housing is provided with a first through hole in the direction of the Z-axis, and the second housing is provided in the first through hole in a floating manner; the second housing and the third housing are arranged in the direction of the Z-axis and are detachably connected to each other, the second housing includes a second through hole, and the third housing includes a third through hole; and the insertion terminal is provided in the second through hole and the third through hole, the second housing is provided with a first limiting structure, and the third housing is provided with a second limiting structure, the first limiting structure and the second limiting structure fixing the insertion terminal. The insertion terminal is limited and fixed in the Z-axis by the second housing and the third housing, so the insertion terminal can float with the second housing to electrically connect with the plug, and the socket is simple in overall structure and is easy to assemble and disassemble.

## Description

### Technical Field

The invention relates to the field of connectors, and particularly provides a socket, an electrical connector, a battery pack and an electric device.

### Technical Background

An electrical connector is a connecting bridge, is a basic component necessary for a complete system, and plays a very important role in electrical equipment. With the expansion of the application field of electrical equipment, the application environment of the electrical connector has also been expanded, for example, to a new energy vehicle.

The electrical connector is divided into a plug and a socket, which are plugged to complete an electrical connection. The electrical connector for a new energy vehicle is divided into a battery end (plug), a vehicle end (socket) and a station end, where the station end is an interface for charging a battery pack in a battery swap station.

The existing socket is complex in structure and is not easy to assemble and maintain.

### Summary

In response to the problems of the socket in the prior art being complex in structure and being not easy to assemble and maintain, the invention provides a socket including an insertion end and a tail end in the direction of a Z-axis, the insertion end being configured for connection with a plug and including a first housing, a second housing, a third housing and an insertion terminal; where the first housing is provided with a first through hole in the direction of the Z-axis, and the second housing is provided in the first through hole in a floating manner; the second housing and the third housing are arranged in the direction of the Z-axis and are detachably connected to each other, the second housing including a second through hole, and the third housing including a third through hole; and the insertion terminal is provided in the second through hole and the third through hole, the second housing is provided with a first limiting structure, and the third housing is provided with a second limiting structure, the first limiting structure and the second limiting structure fixing the insertion terminal.

The insertion terminal is limited and fixed in the Z-axis by the second housing and the third housing, so the insertion terminal can float with the second housing to electrically connect with the plug, and the overall structure is simple. In addition, if disassembly or maintenance is required, by releasing the connection between the third housing and the second housing, the third housing and the insertion terminal can be removed in sequence.

In an optional technical solution of the invention, the socket further includes a first spring and a second spring connecting the first housing and the second housing, the first spring extending in the direction of the Z-axis; and the second spring extends in an XY plane.

In an optional technical solution of the invention, the socket further includes a first seal at the insertion end and a second seal at the tail end, the first seal and the second seal both connecting the first housing and the second housing to seal a gap between the first housing and the second housing.

In an optional technical solution of the invention, the first seal includes an intermediate portion which is not connected to the first housing or the second housing, the intermediate portion including at least two bent portions.

In an optional technical solution of the invention, a first end of the second seal is bonded to the first housing, and a second end of the second seal is sandwiched between the second housing and the third housing.

In an optional technical solution of the invention, the second housing is provided with a first groove, the second seal is provided with a first protrusion, and the first protrusion is provided in the first groove.

In an optional technical solution of the invention, the second housing is provided with a second groove including a first side wall extending in the Z-axis and a second side wall extending in a horizontal direction, the first seal being connected to the second groove, and the second side wall being configured to limit the first seal in the direction of the Z-axis.

In an optional technical solution of the invention, the first limiting structure includes a first boss extending in the Z-axis, the insertion terminal is provided with a second boss extending horizontally and a third boss extending in the Z-axis, and the third housing includes a fourth boss extending in the Z-axis; the first boss is engaged with the second boss; and the third boss is engaged with the fourth boss.

The invention further provides an electrical connector, including a plug and the socket.

### Brief Description of Drawings

FIG. 1 is a cross-sectional view of a socket;
FIG. 2 is a perspective view of a socket;
FIG. 3 is a top view of a socket;
FIG. 4 is an enlarged view of a joint of a second seal and a second housing;
FIG. 5 is an enlarged view of a joint of a first seal and the second housing; and
FIG. 6 is an enlarged view of the second housing and a third housing when limiting an insertion terminal.

List of reference signs:
Insertion end 1;
Tail end 2;
First housing 3, First through hole;
Second housing 4, Second through hole 4.1, First limiting structure 4.2, First groove 4.3, Second groove 4.4, Second side wall 4.41;
Third housing 5, Third through hole 5.1, Second limiting structure 5.2;
Insertion terminal 6, Second boss 6.1;
First spring 7;
First seal 8, Bent portion 8.1;
Second seal 9, First protrusion 9.1;
Third seal 10.

### Detailed Description of Embodiments

The optional implementations of the invention are described below with reference to the accompanying drawings. It should be understood by those skilled in the art that these implementations are only for explaining the technical principles of the invention and are not intended to limit the scope of protection of the invention.

It should be understood that, in the description of the invention, the terms that indicate the orientation or positional relationship, such as "distance", "width", "thickness", "upper", "lower", "left", "right", "inner" and "outer", are based on the orientation or positional relationship shown in the figures, which is merely intended to facilitate and simplify the description of the invention rather than indicating or implying that the device or element must have a particular orientation and be constructed and operated in a particular orientation, and therefore should not be construed as limiting the invention.

In the description of the invention, the terms "first", "second", "third" and "fourth" are used for descriptive purposes only, and cannot be construed as indicating or implying relative importance or implicitly indicating the number of technical features indicated. In the description of the invention, the phrase "a plurality of' means at least two, such as two, three, etc., unless otherwise specifically defined.

In addition, it should also be noted that, in the description of the invention, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the invention can be interpreted according to the specific situation.

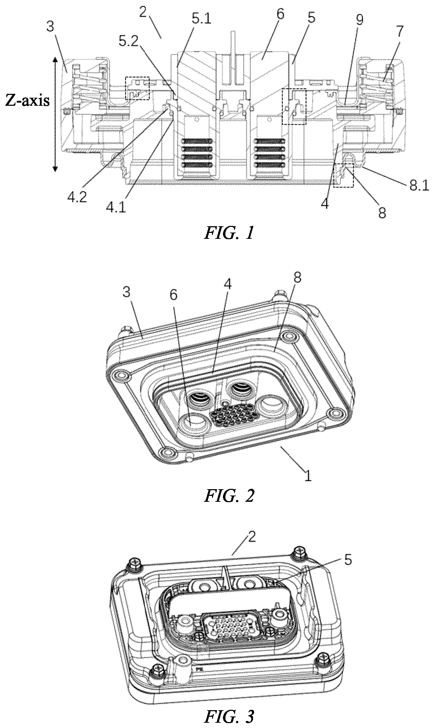

As shown in FIGS. 1-3, the invention provides a socket including an insertion end 1 and a tail end 2 in a Z-axis, the insertion end 1 being configured for connection with a plug, and the tail end 2 being configured for wiring and connecting to a vehicle. The socket includes a first housing 3, a second housing 4, a third housing 5 and an insertion terminal 6. The first housing 3 is provided with a first through hole in the direction of the Z-axis, and the second housing 4 is provided in the first through hole in a floating manner. The second housing 4 and the third housing 5 are arranged in the direction of the Z-axis and are detachably connected to each other, the second housing 4 includes a second through hole 4.1, the third housing 5 includes a third through hole 5.1, and the insertion terminal 6 is provided in the second through hole 4.1 and the third through hole 5.1. The second housing 4 is provided with a first limiting structure, and the third housing 5 is provided with a second limiting structure, the first limiting structure and the second limiting structure fixing the insertion terminal 6. The first limiting structure 4.2 and the second limiting structure 5.2 together limit the movement of the insertion terminal 6 in vertical and horizontal directions, so that the insertion terminal 6 can float with the second housing 4 to achieve an electrical connection with the plug, and the socket is simple in overall structure, is detachable, and is easy to maintain. In the invention, the second housing 4 and the third housing 5 are connected by bolts, and of course can also be connected by other detachable means.

In an optional embodiment of the invention, as shown in FIG. 1, the socket further includes a first spring 7 and a second spring (not shown) connecting the first housing 3 and the second housing 4, i.e., two ends of the first spring 7 are connected to the first housing 3 and the second housing 4, respectively, and two ends of the second spring are also connected to the first housing 3 and the second housing 4, respectively. The first spring 7 extends in the direction of the Z-axis, so that the second housing 4 is allowed to move the insertion terminal 6 to float in the direction of the Z-axis. The second spring extends in an XY plane, allowing the second housing 4 to move the insertion terminal 6 while also floating in X-axis and Y-axis directions. Of course the second spring can also stretch and compress in the XYZ directions at the same time.

In an optional embodiment of the invention, as shown in FIG. 1, the socket further includes a first seal 8 at the insertion end 1 and a second seal 9 at the tail end 2, the first seal 8 and the second seal 9 both connecting the first housing 3 and the second housing 4 to seal a gap between the first housing 3 and the second housing 4. Water vapor and dust can be prevented from entering the socket, and the first seal 8 and the second seal 9 themselves have a certain elasticity, so the second housing 4 can also be allowed to float within a certain range.

In an optional embodiment of the invention, as shown in FIG. 1, a first end of the second seal 9 is bonded to the first housing 3, in particular by injection molding. A second end of the second seal 9 is sandwiched between the second housing 4 and the third housing 5. That is, the second housing 4 and the third housing 5 limit the insertion terminal 6 while also limiting the end of the second seal, thereby improving the sealing reliability of the second seal 9. Injection molding bonding is stronger than gluing, but in practice, an injection molding process may be challenging due to space constraints of an injection molding tooling. In this embodiment, the first end of the second seal 9 is bonded to the first housing 3 in an injection molding manner, and the second end thereof is limited and fixed instead of the injection molding bonding, which can also guarantee the sealing reliability.

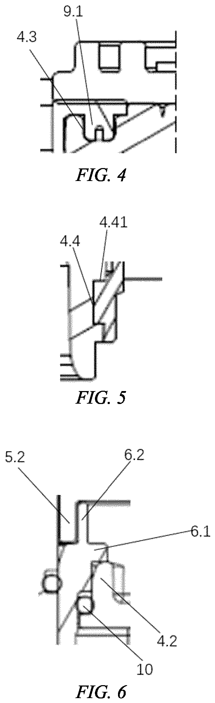

In an optional embodiment of the invention, as shown in FIG. 4, the second housing 4 is provided with a first groove 4.3, the second seal 9 is provided with a first protrusion 9.1, and the first protrusion 9.1 is provided in the first groove 4.3, thereby further improving the sealing reliability of the second seal. Specifically, in this embodiment, the first groove 4.3 opens toward the third housing 5.

In an optional embodiment of the invention, as shown in FIG. 1, one end of the first seal 8 is connected to a mounting surface of the first housing 3, specifically by injection molding or gluing. The mounting surface of the first housing 3 is used to fix the socket with relevant tooling when connecting to the plug, and the relevant tooling can compress the first seal 8. The other end of the first seal 8 is connected to the second housing 4, specifically by injection molding. The second housing 4 includes a cylindrical wall on which a second groove 4.4 is provided. The second groove 4.4 includes a first side wall extending in the direction of the Z-axis and a second side wall 4.41 extending in the horizontal direction, and the first seal 8 is capable of being injection molded to the second groove 4.4, so that the housing increases the strength of connection between the first seal 8 and the second housing 4, and the second side wall 4.41 can also have a limiting effect on the first seal 8 in the direction of the Z-axis.

In an optional embodiment of the invention, as shown in FIG. 1, the first seal 8 includes an intermediate portion which is not connected to the first housing 3 or the second housing 4, the intermediate portion including at least two bent portions 8.1, and the bent portion 8.1 having a U-shaped or V-shaped structure, which allows the first seal 8 to have both sealing and floating functions. In this embodiment, the first seal 8 includes two consecutive and identical bent portions, and may of course also include different sizes of bent portions, and a plurality of bent portions may also be spaced apart.

In an optional embodiment of the invention, as shown in FIGS. 1 and 6, the first limiting structure 4.2 includes a first boss extending in the Z-axis, the insertion terminal 6 is provided with a second boss 6.1 extending horizontally and a third boss 6.2 extending in the Z-axis, and the second limiting structure 5.2 includes a fourth boss extending in the Z-axis. The first boss is engaged with the second boss 6.1; and the third boss 6.2 is engaged with the fourth boss. A third seal 10 is also provided between the insertion terminal 6 and the second housing 4.

In an optional embodiment of the invention, the insertion terminal 6 is a jack, in which a conductive structure is provided, and when the plug and the socket are connected, an electrical connection is established through the conductive structure. Of course, the insertion terminal 6 can also be a conductive pin. The socket can be provided at a battery pack end, or at a vehicle end or at a battery swap station end, depending on the actual needs, which is not limited here.

The invention further provides an electrical connector, including the socket and a plug.

The invention further provides a battery pack, including the socket.

The invention further provides an electric device, including the socket. That is, the socket is provided on either of the battery pack and the electric device, and the corresponding plug mating with the socket on the other. Assembly and disassembly can be facilitated by the configuration of the socket. The electric device may include, but is not limited to, an electric vehicle.

Heretofore, the technical solutions of the invention have been described in conjunction with the optional implementations shown in the drawings, however, those skilled in the art can readily understand that the scope of protection of the invention is clearly not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A socket, which comprises an insertion end and a tail end in the direction of a Z-axis, the insertion end being configured for connection with a plug, the socket comprising a first housing, a second housing, a third housing and an insertion terminal;
wherein the first housing is provided with a first through hole in the direction of the Z-axis, and the second housing is provided in the first through hole in a floating manner;
the second housing and the third housing are arranged in the direction of the Z-axis and are detachably connected to each other, the second housing comprising a second through hole, and the third housing comprising a third through hole; and
the insertion terminal is provided in the second through hole and the third through hole, the second housing is provided with a first limiting structure, and the third housing is provided with a second limiting structure, the first limiting structure and the second limiting structure fixing the insertion terminal.

2. The socket of claim 1, wherein the socket further comprises a first spring and a second spring connecting the first housing and the second housing, the first spring extending in the direction of the Z-axis; and
the second spring extends in an XY plane.

3. The socket of claim 1 or 2, wherein the socket further comprises a first seal at the insertion end and a second seal at the tail end, the first seal and the second seal both connecting the first housing and the second housing to seal a gap between the first housing and the second housing.

4. The socket of claim 3, wherein a first end of the second seal is bonded to the first housing, and a second end of the second seal is sandwiched between the second housing and the third housing.

5. The socket of claim 3 or 4, wherein the second housing is provided with a first groove, the second seal is provided with a first protrusion, and the first protrusion is provided in the first groove.

6. The socket of any one of claims 3 to 5, wherein the second housing is provided with a second groove comprising a first side wall extending in the direction of the Z-axis and a second side wall extending in a horizontal direction, the first seal being connected to the second groove, and the second side wall being configured to limit the first seal in the direction of the Z-axis.

7. The socket of any one of claims 3 to 6, wherein the first seal comprises an intermediate portion which is not connected to the first housing or the second housing, the intermediate portion comprising at least two bent portions.

8. The socket of any one of claims 1 to 7, wherein the first limiting structure comprises a first boss extending in the Z-axis, the insertion terminal is provided with a second boss extending horizontally and a third boss extending in the Z-axis, and the second limiting structure comprises a fourth boss extending in the Z-axis;
the first boss is engaged with the second boss; and the third boss is engaged with the fourth boss.

9. An electrical connector, comprising a socket according to any one of claims 1 to 8 and a plug.

10. A battery pack, comprising a socket according to any one of claims 1 to 8.

11. An electric device, comprising a socket according to any one of claims 1 to 8.
